# EUROPÄISCHE PATENTSCHRIFT

(11) **EP 0 851 986 B1**
(45) Veröffentlichungstag und Bekanntmachung des Hinweises auf die Patenterteilung: **09.05.2001**
(21) Anmeldenummer: 96945131.9
(22) Anmeldetag: 09.09.1996
(51) Int. Cl.: F16L 13/14

(54) **ROHRVERBINDUNG**
PIPE CONNECTOR
RACCORD DE TUYAUX

(30) Priorität: 19.09.1995 DE 19536598
(43) Veröffentlichungstag der Anmeldung: 08.07.1998
(73) Patentinhaber: Mapress GmbH & Co. KG, 40764 Langenfeld (DE)
(72) Erfinder: DIEDERICHS, Rolf, D-47877 Willich (DE)
(74) Vertreter: Henze, Lothar, Dipl.-Ing.
(86) Internationale Anmeldenummer: DE9601717
(87) Internationale Veröffentlichungsnummer: WO9713089

(56) Entgegenhaltungen:
- GB-A- 2 266 482
- US-A- 3 689 111
- US-A- 3 689 112
- US-A- 4 321 743
- US-A- 4 850 621

## Beschreibung

Die Erfindung betrifft eine Rohrverbindung gemäß dem Gattungsbegriff des Hauptanspruches.

Eine gattungsmäßige Rohrverbindung ist von der Firma Geberit bekannt (siehe Auszug aus dem Firmenprospekt). Bei diesem System wird auf einen Rotguß-Fitting ein sogenanntes Verbundrohr aufgeschoben, wobei das Verbundrohr aus einem die Flüssigkeit transportierenden Innenrohr mit einem Aluminiummantel und einem darüber liegenden, den Außenschutz übernehmenden Hüllrohr besteht. Üblicherweise sind Innenrohr und Hüllrohr aus Kunststoff gefertigt. Der Fitting weist einen in Längsrichtung sich erstreckenden Bereich auf, der mit einem Anschlag versehen ist, bis zu dem das zu verbindende Rohr aufgeschoben wird. Der dem Anschlag benachbarte Bereich weist üblicherweise zwei Ringnuten auf, in denen je ein Dichtring angeordnet ist. Der restliche Abschnitt ist stark konturiert, so daß sich das aufgeschobene Rohr bei der Verpressung in die Kontur einformen kann. Nach dem Aufschieben wird von außen eine Preßzange angesetzt und das Rohr sowohl im Dichtringbereich als auch im konturierten Bereich aufgepreßt. Dabei übernimmt der Dichtringbereich die Dichtfunktion und der konturierte Bereich die axiale Sicherung. Nachteilig bei diesem System ist, daß das Verbundrohr nur für einen engen Temperatur- und Druckbereich einsetzbar ist. Weiterhin ist der Fitting in seiner Herstellung sehr aufwendig, da die konturierten Endbereiche sowie der Dichtringbereich präzise hergestellt werden müssen. Ein weiterer Nachteil ist der verbleibende Spalt zwischen aufgeschobenem Rohr und konturiertem Bereich des Fittings. In diesen Spalt können in der Flüssigkeit gelöste aggressive Stoffe eindringen und durch mehrfache Verdunstung die Konzentration überproportional ansteigen und im ungünstigsten Fall zu einer sogenannten Spaltkorrosion führen.

Aufgabe der Erfindung ist es, eine Rohrverbindung der gattungsmäßigen Art anzugeben, die auch für höhere Drücke und Temperaturen geeignet ist und bei der die Entstehung vonr Spaltkorrosion vermieden wird. Diese Aufgabe wird mit den im kennzeichnenden Teil des Hauptanspruches angegebenen Merkmalen gelöst. Vorteilhafte Weiterbildungen sind Bestandteil von Unteransprüchen.

Vorteilhaft bei der erfindungsgemäßen Rohrverbindung ist, daß die erforderliche Positionierung des aufgeschobenen Rohres auf den Fitting ohne weitere Hilfsmittel unmittelbar visuell erkennbar ist. Die seit Jahren bewährte metallische Preßverbindung durch Verformung von Rohr und Fitting wird beibehalten, so daß hohe axiale Längskräfte und damit hohe Innendrücke übertragen werden können. Der Übergang Rohr-Fitting ist spaltfrei, da der Dichtring im Endbereich des Fittings angeordnet ist.

In vorteilhafter Weise wird der Anschlag als dachartiger Wulst ausgebildet, da dieser mit Preßmaschinen in einfacher Weise herstellbar ist. Die radiale Tiefe der flachverlaufenden Ausnehmung für den Dichtring sollte so gering wie möglich sein, da dies der querschnittsbestimmte Engpaß des Leitungsrohrsystems ist. Um das letztgenannte Problem abzumildern, wird außerdem vorgeschlagen, die lichte Weite des Rohres im aufgeschobenen Bereich zu vergrößern, so daß der Querschnitt des daran anschließenden Rohrabschnittes in etwa der lichten Weite im Dichtbereich des Fittings entspricht. Dadurch werden Druckverluste im Verbindungsbereich weitgehend vermieden.

Anhand zweier Ausführungsbeispiele wird die erfindungsgemäße Rohrverbindung näher erläutert.

### Es zeigen:

- Figur 1: einen Längsschnitt durch eine erste Ausführungsform der erfindungsgemäßen Rohrverbindung
- Figur 2: wie Figur 1, jedoch eine andere Ausführungsform

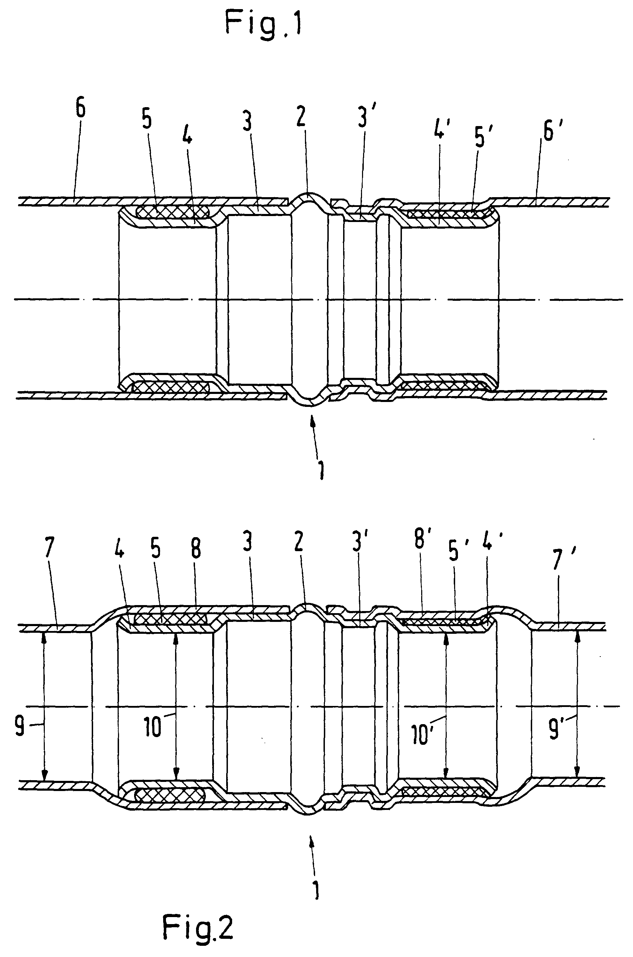

In Figur 1 ist in einem Längsschnitt eine erste Ausführungsform der erfindungsgemäßen Rohrverbindung dargestellt, wobei der linke Bildabschnitt die Rohrverbindung im aufgeschobenen Zustand und der rechte Bildabschnitt die Rohrverbindung nach der Verpressung zeigt. Kernstück der Verbindung ist ein Fitting 1, der einen wulstartig ausgebildeten, radial nach außen sich erstreckenden Anschlag 2 aufweist. Daran schließt sich wenigstens nach einer Seite ein in Längsrichtung sich erstreckender zylindrischer Abschnitt 3,3' an, der dann übergeht in einen als flachverlaufende Ausnehmung 4,4' ausgebildeten Abschnitt. In dieser Ausnehmung 4,4' ist ein Dichtring 5,5' angeordnet. In diesem Ausführungsbeispiel sind zwei glattendige Leitungsrohre 6,6' auf den Fitting 1 aufgeschoben, und zwar bis zum Anschlag 2. Durch ein hier nicht dargestelltes Preßwerkzeug werden nacheinander die zwei Verpreßstellen verformt. Wie eingangs schon erwähnt zeigt der rechte Bildabschnitt den verpreßten Zustand. Dabei übernimmt der verformte Abschnitt 3' die axiale Sicherung der Rohrverbindung und der Abschnitt 4' die Dichtfunktion. Im erstgenannten Abschnitt 3' werden sowohl das aufgeschobene Rohr 6' als auch der darunterliegende Fittingabschnitt 3' verformt. Die Art der Einpressung, z.B. sechskantförmige oder zitronenförmige Segmente hängt ab von der Konturierung des Maules der hier nicht dargestellten Preßbacken.

Figur 2 zeigt eine zweite Ausführungsform, wobei für gleiche Teile gleiche Bezugszeichen verwendet worden sind. Auch hier zeigt der linke Bildabschnitt die Rohrverbindung im aufgeschobenen Zustand und der rechte Bildabschnitt den verpreßten Zustand. Der Fitting 1 ist in seiner Geometrie und Form unverändert wie in Figur 1. Anders gestaltet sind die Rohrendenabschnitte. Die glattendigen Rohre 7,7' weisen im Aufschiebebereich auf den Fitting 1 einen aufgeweiteten Abschnitt 8,8' auf. Dieser wird so gewählt, daß die lichte Weite 9,9' des eigentlichen Leitungsrohres 7,7' in etwa der lichten Weite 10,10' des Fitting 1 im Dichtbereich entspricht. Damit werden Druckverluste im Verbindungsbereich weitgehend vermieden.

## Patentansprüche

1. Rohrverbindung mit einem Rohr, dessen glattendiger Endabschnitt auf einem metallischen Fitting aufgeschoben ist, der mindestens einen in Längsrichtung sich erstreckenden, hülsenartigen Bereich aufweist, der mit mindestens einer sickenartigen Ausnehmung zur Aufnahme eines Dichtelementes und mit einem zu Beginn der Erstreckung liegenden, radial nach außen sich erstreckenden Anschlag versehen ist und Rohr und Fitting mittels eines außen angesetzten mindestens das Rohr plastisch verformenden Pressewerkzeuges unlösbar miteinander verbunden sind, wobei das Rohr sowohl im Bereich des Dichtelementes als auch im benachbarten Bereich auf den Fitting aufgepresst wird,
dadurch gekennzeichnet,
daß Rohr (6, 6', 7, 7') und Fitting (1) aus Metall sind und am Ende der Erstreckung des hülsenartigen Bereiches des Fittings (1) in einer flachverlaufenden Ausnehmung (4, 4') das Dichtelement als Dichtmanschette (5, 5') angeordnet ist und Rohr (6, 6',7, 7') und Fitting im Bereich zwischen Dichtmanschette (5, 5') und Anschlag (2) eine die axiale Sicherung bildende Verformungsstelle (3') bilden.

2. Rohrverbindung nach Anspruch 1,
dadurch gekennzeichnet,
daß der Anschlag (2) als dachartiger Wulst ausgebildet ist.

3. Rohrverbindung nach Anspruch 1,
dadurch gekennzeichnet,
daß die radiale Erstreckung der flachverlaufenden Ausnehmung (4, 4') mindestens 5% des Außendurchmessers des Fittings (1) beträgt.

4. Rohrverbindung nach den Ansprüchen 1 bis 3,
dadurch gekennzeichnet,
daß das Rohr im aufgeschobenen Bereich (8, 8') eine größere lichte Weite aufweist als der übrige daran sich anschließende Rohrabschnitt (7, 7').

5. Rohrverbindung nach einem der Ansprüche 1 bis 4
dadurch gekennzeichnet,
daß Rohr und Fitting aus Edelstahl oder Titan sind.

## Claims

1. A pipe connection with a pipe, the smooth-ended end section of which is pushed on a metallic fitting which has at least one sleeve-like region extending in longitudinal direction, which is provided with at least one crease-like recess to receive a sealing element and with a stop lying at the start of the extent, extending radially outwards, and pipe and fitting being connected undetachably with each other by means of an externally applied pressing tool at least deforming the pipe in a plastic manner, the pipe being pressed onto the fitting both in the region of the sealing element and also in the adjacent region,
characterised in that
the pipe (6, 6', 7, 7') and fitting (1) are of metal and at the end of the extent of the sleeve-like region of the fitting (1) the sealing element is arranged as sealing sleeve (5, 5') in a flat-running recess (4, 4') and the pipe (6, 6', 7, 7') and fitting in the region between sealing sleeve (5, 5') and stop (2) form a deformation point (3') forming the axial security.

2. The pipe connection according to Claim 1,
characterized in that
the stop (2) is constructed as a roof-like bead.

3. The pipe connection according to Claim 1,
characterised in that
the radial extent of the flat-running recess (4, 4') amounts to at least 5% of the outer diameter of the fitting (1).

4. The pipe connection according to Claims 1 to 3,
characterised in that
the pipe in the pushed-on region (8, 8') has a greater inside width than the remaining pipe section (7, 7') adjoining thereto.

5. The pipe connection according to any of Claims 1 to 4,
characterised in that
the pipe and fitting are of high-quality steel or titanium.

## Revendications

1. Liaison pour tube, comportant un tube, dont le tronçon d'extrémité lisse est enfilé sur un raccord métallique, qui présente au moins une zone s'étendant en direction longitudinale, du type gaine, qui est munie d'au moins un évidement du type moulure pour recevoir un élément d'étanchéité et d'une butée se trouvant au début de l'extension et s'étendant radialement vers l'extérieur, et le tube et le raccord étant reliés ensemble de façon inamovible au moyen d'un outil de pressage, monté à l'extérieur, déformant plastiquement au moins le tube, le tube étant pressé sur le raccord aussi bien dans la zone de l'élément d'étanchéité que dans la zone voisine,
caractérisée en ce que le tube (6, 6', 7, 7') et le raccord (1) sont réalisés en métal et, à l'extrémité de l'extension de la zone du type gaine du raccord (1), il est agencé, dans un évidement (4, 4') s'étendant à plat, l'élément d'étanchéité comme manchon d'étanchéité (5, 5'), et le tube (6, 6', 7, 7') et le raccord dans la zone entre le manchon d'étanchéité (5, 5') et la butée (2) formant un point de déformation (3') constituant la sécurité axiale.

2. Liaison pour tube selon la revendication 1,
caractérisée en ce que la butée (2) est réalisée comme bourrelet en forme de toit.

3. Liaison pour tube selon la revendication 1,
caractérisée en ce que l'extension radiale de l'évidement (4, 4') s'étendant à plat vaut au moins 5 % du diamètre externe du raccord (1).

4. Liaison pour tube selon les revendications 1 à 3,
caractérisée en ce que le tube, dans la zone enfilée (8, 8'), présente une largeur intérieure plus grande que le tronçon de tube restant s'y raccordant (7, 7').

5. Liaison pour tube selon une des revendications 1 à 4,
caractérisée en ce que le tube et le raccord sont réalisés en acier spécial ou en titane.
